# EUROPEAN PATENT APPLICATION

(11) **EP 2 133 264 A1**
(43) Date of publication of application: **16.12.2009**
(21) Application number: 06851100.5
(22) Date of filing: 25.12.2006
(51) Int. Cl.: B64C 13/00, B64D 45/00

(54) **LIGHT MULTIPURPOSE AIRCRAFT PROVIDED WITH A CONTROL INTEGRATED SYSTEM**

(71) Applicant: Otkrytoe Aktsionernoe Obschestvo "Opytno-Konstruktorskoe Byuro IM. A.S. Yakovleva, Moscow 125315 (RU); Gosudarstvennoe Uchrezhdenie Federalnoe Agentstvo Po Pravovoi Zaschite Rezulatatov Intellektualnoi Deyatelnosti Voennogo, Spetsialnogo I Dvoinogo, Moscow 125040 (RU)
(72) Inventor: DEMCHENKO, Oleg Fedorovich, Moscow, 129272 (RU); DOLZHENKOV, Nikolai Nikolaevich, Moscow, 125083 (RU); POPOVICH, Konstantin Fedorovich, Moscow, 117296 (RU); SHKOLIN, Vladimir Petrovich, Moscow, 125195 (RU); GURTOVOI, Arkady Iosifovich, Moscow, 125057 (RU); KUZNETSOV, Vladimir Grigorievich, Moscow, 123181 (RU); NIKITIN, Vyacheslav Nikolaevich, Moscow, 109559 (RU); KODOLA, Valery Grigorievich, Moskovskaya obl., 141170 (RU)
(74) Representative: Andrae, Steffen
(86) International application number: PCT/RU2006/000697
(87) International publication number: WO 2008/079038

(57) **Abstract**

A light multi-purpose aircraft with a controlling integrated complex comprises a fuselage (1); a wing (2); a fin assembly (3); a landing gear (4); a power plant (5); a radio inertial navigation and landing complex; an integrated electronic display system; a complex emergency escape system; an objective monitoring system; a complex control system; a general-purpose aircraft equipment system; a crest-of-helmet target indication system; a speech information control system; a data input system; control panels; an on-board communication complex; on-board maintenance panels; and also a controlling integrated complex (6) incorporating an on-board digital computer system (7); an information exchange system composed of multiplexer and radial channels; and systems and/or units for interfacing with all functional complexes and systems of the aircraft in which the on-board digital computer system (7), through corresponding interfacing systems and/or units, is connected by multiplexer channels with the aircraft systems, including the general-purpose aircraft equipment system; in doing so, a system for interfacing with a general-purpose aircraft equipment (23) consists of a first conversion and computation unit (27) and a second conversion and computation unit (28) connected to a control and monitoring unit (29), and also of general-purpose aircraft equipment interfacing units; said units (27, 28) being connected to a multiplexer information exchange channel, said control and monitoring unit (29) being interfaced by radial channels with both said general-purpose aircraft equipment interfacing units and interfacing systems and/or units of other aircraft systems, which in turn are connected with multiplexer or radial channels of an information exchange system of the controlling integrated complex (6).

A light multi-purpose aircraft with a controlling integrated complex affords an improved efficiency of realizing monitoring and diagnosis functions of all aircraft systems, including electronic and general-purpose aircraft equipment.

## Description

### FIELD OF THE INVENTION

The present invention relates to aeronautical engineering and is intended for use when manufacturing light multi-purpose aircrafts, in particular those having controlling integrated complexes.

### BACKGROUND OF THE INVENTION

There has been known an aircraft with a system for controlling a general-purpose aircraft equipment comprising, inter alia, a fuselage, a wing, a tail unit, a landing gear, main and auxiliary power plants, said system for controlling a general-purpose aircraft equipment having two automatic control loops structurally embodied in the main and reserve conversion and calculation units that are connected to actuators through a monitoring and control unit. A manual control loop is provided with control panels, an enunciator panel and a central signal light. A control system is connected through a multiplexer channel with a set of on-board digital computers, electronic control systems of port and starboard engines, a recording and monitoring system, a guidance and landing equipment and a complex control system. Said control system is connected through code communication lines with a fuel control and monitoring system, a voice message equipment, a complex electron display system and said auxiliary power plant (RU 2263044 C1, B 64 C 13/00, October 27, 2005).

The drawback to the known aircraft is associated with insufficient realization of monitoring and diagnosis functions of electronic and general-purpose aircraft equipment.

The closest prior art to be used for the claimed invention is a light multi-purpose aircraft at enhanced maneuvering properties comprising, inter alia, a fuselage, a wing, a fin assembly, a landing gear, a power plant and a controlling integrated complex consisting of an information exchange system, an on-board digital computer system for controlling flight and training and combat operations, an external storage and an information input system, a radio inertial navigation and landing system, a complex aircraft control system with consoles arranged in a pilot and operator cockpit, an armament control system with consoles arranged in a pilot and operator cockpit, a complex system for electronic display, control and sighting, an emergency warning board, a two-fold redundant aircraft equipment control system, an on-board objective monitoring system, a speech information control system, an electric power supply system, internal and external lighting facilities, a complex emergency escape system, a two-fold redundant power plant control system. In doing so, the information exchange system is divided into three independent multiplexer information exchange channels, radial couplings are made between the computing system and the aircraft equipment control system and also between the complex system for electronic display, control and sighting and the complex aircraft control system (Patent RU 2252899 C1, B64C 13/00, Priority of May 20, 2004).

The drawback to the prior art apparatus consists in insufficient realization of monitoring and diagnosis functions of electronic and general-purpose aircraft equipment.

### SUMMARY OF THE INVENTION

It is an object of the present invention to create a light multi-purpose aircraft affording improved capabilities regarding realization of monitoring and diagnosis functions of electronic and general-purpose aircraft equipment.

The above object has been achieved in a light multi-purpose aircraft with a controlling integrated complex comprising a fuselage (1); a wing (2); a fin assembly (3); a landing gear (4); a power plant (5); a radio inertial navigation and landing complex; an integrated electronic display system; a complex emergency escape system; an objective monitoring system; a complex aircraft control system; a general-purpose aircraft equipment system; a crest-of-helmet target indication system; a speech information control system; a data input system; control panels; an on-board communication complex; on-board maintenance panels; and also a controlling integrated complex (6) incorporating an on-board digital computer system (7); an information exchange system composed of multiplexer and radial channels; and systems and/or units for interfacing with all functional complexes and systems of the aircraft in which the on-board digital computer system (7), through corresponding interfacing systems and/or units, is connected by multiplexer channels with the integrated electronic display system, control panels, the radio inertial navigation and landing complex, the objective monitoring system, the complex control system, an armament set and the general-purpose aircraft equipment system, **characterized in that** a system for interfacing with a general-purpose aircraft equipment (23) consists of a first conversion and computation unit (27) and a second conversion and computation unit (28) connected to a control and monitoring unit (29), and also of general-purpose aircraft equipment interfacing units; said units (27, 28) being connected to a multiplexer information exchange channel, said control and monitoring unit (29) being interfaced by radial channels with both said general-purpose aircraft equipment interfacing units and interfacing systems and/or units of other aircraft systems, which in turn are connected with multiplexer or radial channels of an information exchange system of the controlling integrated complex (6).

Thanks to the proposed invention, there is increase in a level of automation, control, monitoring and diagnosis of electronic and general-purpose aircraft equipment at the expense of connecting essentially all elements of general-purpose aircraft equipment and also particularly important systems of electronic equipment to multiplexer information exchange channels.

### BRIEF DESCRIPTION OF THE DRAWINGS

The present invention is explained by the following drawings in which:
FIG. 1 shows a general view of a light multi-purpose aircraft with a controlling integrated complex;
FIG. 2 shows a diagram of said controlling integrated complex;
FIG. 3 shows a diagram of a general-purpose aircraft equipment interfacing;
where:
- 1-: a fuselage;
- 2-: a wing;
- 3-: a fin assembly;
- 4-: a landing gear;
- 5-: a power plant;
- 6-: a controlling integrated complex;
- 7-: an on-board digital computer system;
- 8-: a first on-board digital computer;
- 9-: a second on-board digital computer;
- 10-: a system for interfacing with control panels;
- 11-: a system for interfacing with an integrated electronic display system;
- 12-: a system for interfacing with a speech information control system;
- 13-: a system for interfacing with a data input system;
- 14-: a system for interfacing with a crest-of-helmet target indication system;
- 15-: a system for interfacing with a radio inertial navigation and landing complex;
- 16-: a system for interfacing with a complex aircraft control system;
- 17-: a system for interfacing with an on-board communication complex;
- 18-: a system for interfacing with an objective monitoring system;
- 19-: a system for interfacing with a power plant control system;
- 20-: a system for interfacing with a complex emergency escape system;
- 21-: a system for interfacing with on-board maintenance panels;
- 22-: a system for interfacing with an armament set;
- 23-: a system for interfacing with a general-purpose aircraft equipment;
- 24-: a first multiplexer information exchange channel;
- 25-: a second multiplexer information exchange channel;
- 26-: a third multiplexer information exchange channel;
- 27-: a first conversion and computation unit;
- 28-: a second conversion and computation unit;
- 29-: a control and monitoring unit;
- 30-: a unit for interfacing with an air conditioning system;
- 31-: a unit for interfacing with an intra-cabin signaling system;
- 32-: a unit for interfacing with an inter-aircraft voice intercom;
- 33-: a unit for interfacing with a pneumatic-hydraulic system;
- 34-: a unit for interfacing with a braking system;
- 35-: a unit for interfacing with a fire protection system;
- 36-: a unit for interfacing with a windshield heating system;
- 37-: a unit for interfacing with a life support system;
- 38-: a unit for interfacing with an electric power supply system;
- 39-: a unit for interfacing with a fuel control and monitoring system;
- 40-: a unit for interfacing with a fuel-flow indicator;
- 41-: a unit for interfacing with an oxygen system;
- 42-: a unit for interfacing with a landing gear control system;
- 43-: a unit for interfacing with a canopy lock signaling system;
- 44-: a unit for interfacing with an outer lighting system;
- 45-: a unit for interfacing with a fuel system;
- 46-: a unit for interfacing with an air-intake flap control system;
- 47-: a unit for interfacing with a centralized oil filling system.

### BEST MODE TO CARRY OUT THE INVENTION

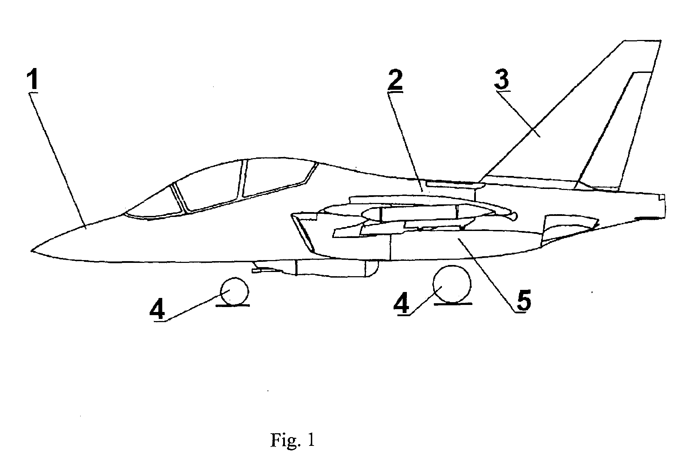

With reference to Fig. 1, a light multi-purpose aircraft comprises a fuselage (1); a wing (2); a fin assembly (3); a landing gear (4); a power plant (5); and also other functional complexes and systems that are necessary for keeping the aircraft operating.

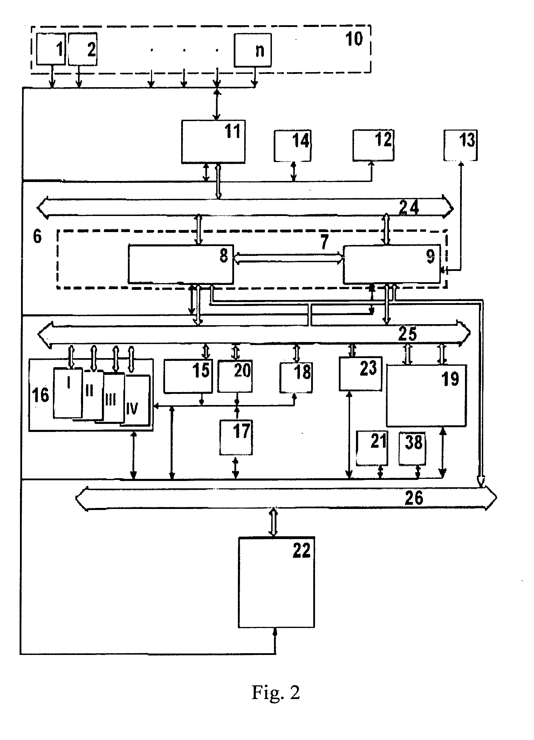

Referring to Fig. 2, a controlling integrated complex (6) is an aggregate of interconnected software-hardware facilities pooled by an information exchange system. The controlling integrated complex (6) comprises:
- an on-board digital computer system (7) with two on-board digital computers (8, 9);
- systems and/or units for interfacing with other complexes or systems of the aircraft;
- the information exchange system composed of multiplexer and radial channels to interface all aircraft systems with the on-board digital computer system (7).

The controlling integrated complex (6) contains interfacing systems and/or units as follows: system for interfacing with control panels (10); system for interfacing with an integrated electronic display system (11); system for interfacing with a speech information control system (12); system for interfacing with a data input system (13); system for interfacing with a crest-of-helmet target indication system (14); system for interfacing with a radio inertial navigation and landing complex (15); system for interfacing with a complex aircraft control system (16); system for interfacing with an on-board communication complex (17); system for interfacing with an objective monitoring system (18); system for interfacing with a power plant control system (19); system for interfacing with a complex emergency escape system (20); system for interfacing with on-board maintenance panels (21); system for interfacing with an armament set (22); system for interfacing with a general-purpose aircraft equipment (23).

The information exchange system is composed of multiplexer and radial information exchange channels; in a specific embodiment of the present invention a light multi-purpose aircraft with a controlling integrated complex (6) comprises three multiplexer channels (24-26) in the information exchange system.

In the controlling integrated complex, the on-board digital computer system (7) is connected via multiplexer channels with such aircraft complexes and systems as an integrated electronic display system, a radio inertial navigation and landing complex, a complex aircraft control system, an objective monitoring system, a power plant control system, a complex emergency escape system, an armament set, a general-purpose aircraft equipment system, through corresponding interfacing systems (11, 15, 16, 18, 19, 20, 22, 23).

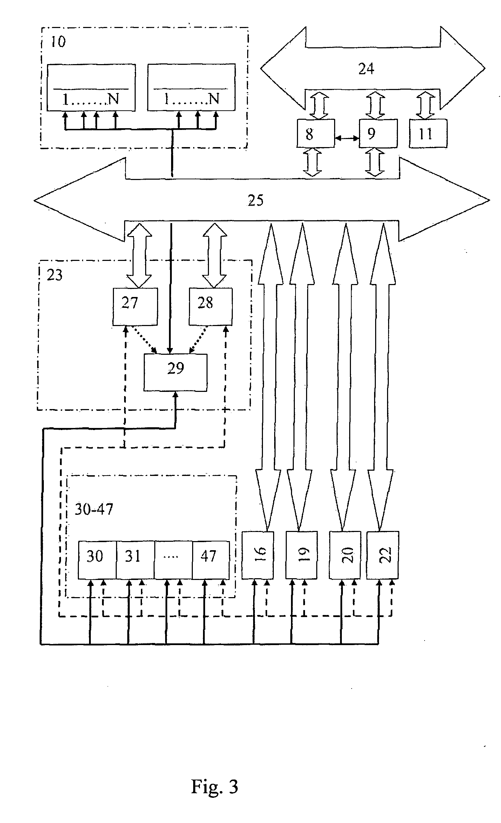

With reference to Fig. 3, a system for interfacing with a general-purpose aircraft equipment (23) incorporates a first conversion and computation unit (27), a second conversion and computation unit (28), a control and monitoring unit (29), and also an intersystem information exchange network composed of radial and multiplexer channels to ensure information exchange between elements of the system for interfacing with a general-purpose aircraft equipment (23) and other aircraft systems and also with the on-board digital computer system (7).

The composition of units for interfacing with the general-purpose aircraft equipment may vary depending on the list of aircraft equipment. In a specific embodiment of the present invention, a system for interfacing with a general-purpose aircraft equipment (23) incorporates the following interfacing units: a unit for interfacing with an air conditioning system (30); a unit for interfacing with an intra-cabin signaling system (31); a unit for interfacing with an inter-aircraft voice intercom (32); a unit for interfacing with a pneumatic-hydraulic system (33); a unit for interfacing with a braking system (34); a unit for interfacing with a fire protection system (35); a unit for interfacing with a windshield heating system (36); a unit for interfacing with a life support system (37); a unit for interfacing with an electric power supply system (38); a unit for interfacing with a fuel control and monitoring system (39); a unit for interfacing with a fuel-flow indicator (40); a unit for interfacing with an oxygen system (41); a unit for interfacing with a landing gear control system (42); a unit for interfacing with a canopy lock signaling system (43); a unit for interfacing with an outer lighting system (44); a unit for interfacing with a fuel system (45); a unit for interfacing with an air-intake flap control system (46); a unit for interfacing with a centralized oil filling system (47).

Two-fold redundancy in the system for interfacing with the general-purpose aircraft equipment is ensured at the expense of the first and second conversion and computation units (27, 28) that are connected to the control and monitoring unit (29). In turn, the control and monitoring unit (29) ensures checking and monitoring of the operation of said first and second conversion and computation units (27, 28).

The units (27, 28) are connected to one of multiplexer information exchange channels of the controlling integrated complex (6), whereas the control and monitoring unit (29) is connected by radial channels with both all interfacing units forming part of the system for interfacing with a general-purpose aircraft equipment (23) and interfacing systems and/or units of other aircraft systems, which in turn are connected with multiplexer or radial channels of the information exchange system of the controlling integrated complex (6).

Operation of the light multi-purpose aircraft with the controlling integrated complex enables performance of the following tasks:
- general tasks that maintain the aircraft in service over the entire range of flight characteristics by means of data sources on board, a glider control equipment, the engine operation;
- special tasks that enable preparation and application of target destruction means and electronic counteraction against them.

Equipment for the implementation of the first group of the above tasks, as a rule, functions or is on the alert for the application during all flight stages, i.e. from take-off to landing.

The above special tasks are performed through the use of equipment which is in operation episodically: when overcoming an enemy's air defense zone, when contacting a target, etc.

Owing to the controlling integrated complex (6), all aircraft systems are in close information, logic and energy interaction.

Architecture of the controlling integrated complex (6) is open. It makes it possible to build-up the composition of airborne equipment, the armament content and to vary sighting systems by a list of equipment, with minimal corrections in hardware part and corresponding corrections in a module structure of software part of the on-board digital computer system (7) and other aircraft complexes and systems.

The controlling integrated complex (6) ensures solution of problems in real time with the potentials of active control of the aircraft and its systems to perform the following tasks:
- accumulating data regarding a situation at hand, synthesizing the situation at hand based on equicharacteristic information, and a real time analyzing;
- selecting optimal trajectory to fly-off enemy's air defense zones;
- changing and closer defining a flight course;
- selecting recommendations as to the use of tactical solutions in different stages of air fight conduct;
- classifying and selecting targets;
- determining a number of targets to be fired simultaneously, sequence and order of consumable destruction means;
- organizing control of operating conditions of complexes constituting the controlling integrated complex (6);
- optimal applying the detection means and electronic suppression means;
- determining the interaction and distribution of functions between aircrafts in a group;
- monitoring the operation of the controlling integrated complex (6), etc.

Displaying support of piloting and navigation modes, of monitoring the operation of general-purpose aircraft equipment and of combat application may be realized on liquid-crystal array, thus enabling not only presentation of ever-growing body of data from different means over a limited area of an instrument panel but also optimization of conditions for the perception of a qualitative instrument and natural extra-cabin data and improvement of such data visualization.

The system for interfacing with a general-purpose aircraft equipment (23) offers the following services:
- receipt, from the interfacing units, of analog and discrete information, as well as receipt of information through code communication lines, with parameters suited to the requirements of All-Union Standard 18977-79 and Technical Guides 1495-75 (with modification 2);
- receipt of information to be transmitted through a multiplexer information exchange channel, with parameters suited to the requirements of All-Union Standard 26765. 52-87;
- logical processing of the received information;
- generation and presentation of the signaling information;
- generation and presentation, to the interfaced systems in their ground monitoring, of serviceability request signals initiating their actuation into expanded verification mode;
- control of a general-purpose aircraft equipment in manual and automatic modes;
- flight monitoring of serviceable conditions of a general-purpose aircraft equipment and other aircraft systems;
- organization of ground monitoring of the systems and equipment during servicing and preflight action;
- receipt of the results of monitoring the interfaced systems in the form of discrete signals and their transportation to the on-board digital computer system (7) through a multiplexer information exchange channel, with parameters suited to the requirements of All-Union Standard 26765. 52-87;
- generation and presentation of voice message codes to a voice message equipment through a code communication line, with parameters suited to the requirements of All-Union Standard 18977-79 and Technical Guides 1495-75 (with modification 2);
- control of operating conditions of the objective monitoring system through a multiplexer information exchange channel, with parameters suited to the requirements of All-Union Standard 26765. 52-87.

The system for interfacing with a general-purpose aircraft equipment (23) offers the following services:
- generation and presentation of control signals to units for interfacing with a general-purpose aircraft equipment (30-47);
- provision of translation of incoming signals from control panels.

The system for interfacing with a general-purpose aircraft equipment (23) may offer the control services in manual mode (for which purpose provision is made of manual controls "MANUAL/ AUTOMATIC" located on one of the control panels in the cockpit) and also in automatic mode.

The system for interfacing with a general-purpose aircraft equipment (23) affords receipt and processing of information to be transmitted from interfaced systems through code communication lines, with parameters suited to the requirements of All-Union Standard 18977-79 and Technical Guides 1495-75 (with modification 2); data-transmission rate is 50 KB/ sec + 1%.

When logically processing signals in expanded verification mode, the system for interfacing with a general-purpose aircraft equipment (23) conducts self-testing, which results are transmitted through a multiplexer channel to the on-board digital computer system (7) and the system for interfacing with an objective monitoring system (18).

The system for interfacing with a general-purpose aircraft equipment (23) affords presentation of "serviceability request" signals to each of the aircraft interfaced systems. These signals have the following parameters:
availability of the signal - voltage is from 16.5 to 33 V (load current is up to 40 mA);
absence of the signal - open circuit (leakage current is up to 0.2 mA).

The system for interfacing with a general-purpose aircraft equipment (23) affords presentation of 80 control instructions (voltage is from 16.5 to 33 V; load current is from 0.1 to 3.5 A) entering executive devices, starters, and commutations.

The system for interfacing with a general-purpose aircraft equipment (23) affords presentation of 10 once-only instructions to the unit for interfacing with a fuel system (45) in the following form:
availability of the signal - logical "1" - voltage is (3.7±1.3) V;
absence of the signal - logical "0" - voltage is (0-0.44) V.

The system for interfacing with a general-purpose aircraft equipment (23) affords operation in the following modes:
"controller - terminal";
"terminal - controller";
"terminal - terminal".

In case of the failure of the on-board digital computer system (7), the system for interfacing with a general-purpose aircraft equipment (23) affords proper functioning through a multiplexer information exchange channel of the controlling integrated complex (6) as a controller; in case of the failure of said multiplexer channel, the system for interfacing with a general-purpose aircraft equipment (23) is connected to the control panels through radial channels.

Electric power supply of the system is carried out from a power supply system composed of two secondary d.c. channels with a 27 V rated voltage.

The quality of electric power is in line with All-Union Standard 19705-89 for systems with rectifiers.

The conversion and computation units (27, 28) are linked with two channels of a power supply system and function properly with the electric power supply quality parameters through one channel - for standard and emergency operation modes (in steady-state and transient conditions); in doing so, the second electric power supply channel may be power supplied with the quality parameters for abnormal mode.

With a simultaneous electric power supply interruption or simultaneous voltage drop in accordance with All-Union Standard 19705-89, items 2.2. 11, by two channels while parked, the system does not break down and generates no false signals and instructions (apart from their removal). When restoring the electric power supply quality (if only in one channel of a power supply system) to standard or emergency value of parameters, the system serviceability should be restored fully, without interference of the crew (automatically) in a time up to 1 sec.

At the sacrifice of the system for interfacing with an armament set (22) the aircraft, when preparing aviation destruction means it accommodates for application, performs the following tasks: selection of aviation destruction means for application; preparation and start (release) of the selected armament in accordance with a required time cyclogram; transmission to the on-board digital computer system (7) of data concerning a type, availability and readiness to the application of aviation destruction means; formation of necessary blockings to ensure safety in service and use of aviation destruction means; performance of the system built-in check and training mode regarding the armament; application of electric power supply from on-board sources to aviation destruction means; conversion and transmittance of target indication signals to aviation destruction means.

### Industrial applicability

The present invention may be used in aeronautical engineering when manufacturing light multi-purpose aircrafts with controlling integrated complexes, in order to improve efficiency of realizing monitoring and diagnosis functions of all aircraft systems, including electronic and general-purpose aircraft equipment.

## Claims

1. light multi-purpose aircraft with a controlling integrated complex comprising a fuselage (1); a wing (2); a fin assembly (3); a landing gear (4); a power plant (5); a radio inertial navigation and landing complex; an integrated electronic display system; a complex emergency escape system; an objective monitoring system; a complex control system; a general-purpose aircraft equipment system; a crest-of-helmet target indication system; a speech information control system; a data input system; control panels; an on-board communication complex; on-board maintenance panels; and also a controlling integrated complex (6) incorporating an on-board digital computer system (7); an information exchange system composed of multiplexer and radial channels; and systems and/or units for interfacing with all functional complexes and systems of the aircraft in which the on-board digital computer system (7), through corresponding interfacing systems and/or units, is connected by multiplexer channels with the integrated electronic display system, control panels, the radio inertial navigation and landing complex, the objective monitoring system, the complex control system, an armament set and the general-purpose aircraft equipment system, **characterized in that** a system for interfacing with a general-purpose aircraft equipment (23) consists of a first conversion and computation unit (27) and a second conversion and computation unit (28) connected to a control and monitoring unit (29), and also of general-purpose aircraft equipment interfacing units; said units (27, 28) being connected to a multiplexer information exchange channel, said control and monitoring unit (29) being interfaced by radial channels with both said general-purpose aircraft equipment interfacing units and interfacing systems and/or units of other aircraft systems, which in turn are connected with multiplexer or radial channels of an information exchange system of the controlling integrated complex (6).
